Europäisches Patentamt

(19) **European Patent Office**

**Office européen des brevets**

(11) Publication number: **0 011 662**
**B1**

(12) **EUROPEAN PATENT SPECIFICATION**

(45) Date of publication of patent specification: **14.09.83**

(51) Int. Cl.³: **C 08 J 11/00**

(21) Application number: **78300693.5**

(22) Date of filing: **29.11.78**

(54) Hydrolysis of polyurethanes.

(43) Date of publication of application:
**11.06.80 Bulletin 80/12**

(45) Publication of the grant of the patent:
**14.09.83 Bulletin 83/37**

(84) Designated Contracting States:
**BE DE FR GB NL**

(56) References cited:
**BE - A - 869 046**
**DE - C - 951 268**
**DE - C - 967 601**
**FR - A - 2 210 494**
**GB - A - 979 261**
**US - A - 3 423 337**
**US - A - 3 441 616**
**US - A - 3 489 598**

(73) Proprietor: **FORD MOTOR COMPANY LIMITED**
**Eagle Way**
**Brentwood Essex CM13 3BW (GB)**
(84) **GB**
(73) Proprietor: **FORD-WERKE AKTIENGESELLSCHAFT**
**Ottoplatz 2 Postfach 21 03 69**
**D-5000 Köln 21 (DE)**
(84) **DE**
(73) Proprietor: **FORD FRANCE SOCIETE ANONYME**
**344 Avenue Napoléon Bonaparte B.P. 307**
**F-92506 Rueil Malmaison Cedex (FR)**
(84) **FR**
(73) Proprietor: **Ford Motor Company**
**The American Road**
**Dearborn MI 48121 (US)**
(84) **BE NL**

(72) Inventor: **Gerlock, John Lawrence**
**23655 Rowe**
**Dearborn, Michigan 48126 (US)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England

Hydrolysis of polyurethanes

This invention relates to the hydrolysis of polyurethanes.

Conversion of scrap polyurethane materials, especially polyurethane foams, by chemical methods into useful decomposition products has received considerable recent attention. Of the various approaches proposed for decomposition of polyurethane scrap, high temperature hydrolysis has the merit of minimising the need for large amounts of organic solvents, as is required in accordance with other approaches.

A number of proposals have been made for hydrolysing or softening polyurethane foams or other polymeric materials. For example British patent specification No: 858127, French patent specification No: 2210494 and U.S. patent specification No: 3225094 propose that superheated steam be used to hydrolyse or soften polymer foams. Other patent specifications disclose the use of water in the liquid phase for such hydrolysis. Processes of the latter type are disclosed in German patent specifications Nos: 951268 and 067760, U.S. patent specification No: 3441616 and British patent specification No: 979261. It is known in such processes to incorporate a base such as alkali metal or alkaline earth metal oxides or hydroxides to assist the liquid phase hydrolysis or to combine with biproducts thereof, such as carbaminates which interfere with the subsequent purification of the main hydrolysis products.

All such liquid phase hydrolysis processes however involve a compromise between the desirable high reaction rates obtainable at high pressures, e.g. 30—60 atmospheres, where relatively expensive pressure vessels are required for the reaction, and the undesirable slow reaction rates obtainable at low pressures where more conventional but larger and cheaper equipment can be used.

One attempt at upgrading low pressure processes is exemplified by U.S. Serial No: 816,636 (German patent application P2831483.2) wherein ammonia introduced into a low pressure water vapour system in which hydrolysis is effected at above 185°C. The reaction rates are however still relatively slow.

According to the present invention, there is provided a method of hydrolysing polyurethane which comprises treating the polyurethane with superheated steam characterised in that the hydrolysis is effected in the presence of a basic alkali metal or alkaline earth metal compound.

In contrast with the liquid phase hydrolysis systems described in the publications referred to above, the method of the present invention is carried out using superheated steam in which water in the liquid phase is not present at any appreciable level.

The basically reacting alkali metal or alkaline earth metal compounds provide a catalytic effect in the super heated hydrolysis of polyurethane foams. Remarkably in such reactions, basically reacting compounds (at low levels as compared to the amount of foam present) can increase hydrolysis rate by a factor of two or more.

This invention is advantageously suitable for recovery of flexible polyurethane foams made by reacting a mixture comprising aromatic diisocyanate (e.g., toluene diisocyanate), high molecular weight polyol (e.g., polyether triol with number average molecular weight in excess of 1000 up to about 9000), and water in the presence of a small amount of amine or other catalysts, e.g. dimethylaminomorpholine triethylenediamine. Other ingredients typically included in the formulations are surfactants, fillers, pigments and so forth most often in minor amounts. Other foams suitable include those prepared from diisocyanates and polyesters such as esters of 1,4 butane diol and adipic acid. Still other foams as rigid and semi-flexible foams are typically made with similar ingredients but with the active hydrogen compound, e.g., polyol, being of lower molecular weight. Decomposition of any such foams that include ester type (e.g., urethane) linkages and amide type (e.g., urea) linkages predominantly constitute the preferred type of polyurethane scrap material that may be recovered by hydrolysis according to the invention herein.

Polyurethane foam technology is described, for instance, in Polyurethane, Chemistry and Technology, by J. H. Saunders and K. C. Frisch, Part II Technology, Interscience Publishers, New York (1967).

In a currently preferred method of carrying out this invention an aqueous dilute solution, e.g., less than 10% active, of the basically reacting compound is used to apply such compound uniformly on the polyurethane prior to its decomposition. One method of application is prior to introduction of a polyurethane foam material into a zone wherein the hydrolysis reaction takes place and this method utilizes immersion of the foam material into the dilute solution and thereafter drying the foam material to leave a uniform deposit of the solid basically reacting compound.

Placing foam wetted with aqueous solution as above into a reaction zone comprising dry steam can effect drying of at least a portion of the foam to provide a concentrated layer of basically reacting compound on the foam. Alternatively, the foam may be dried in a separate stage prior to its inclusion in the zone of hydrolysis. Still other methods for applying the basically reacting compound on polyurethane foam include application prior to its decomposition during hydrolysis as by injection or spraying on its surface as the foam is being decomposed during hydrolysis.

The basically reacting alkali metal or alkaline earth metal compound preferably comprises alkali metal as, for example, alkali metal hydroxides, particularly sodium hydroxide in view of its solubility.

# 0 011 662

Other basically reacting compounds, such as alkaline earth oxides e.g. calcium oxide may be applied, for example, from aqueous or alcohol solutions or dispersions. Still other basically reacting compounds include alkoxides, especially lower alkoxide, e.g., sodium or potassium ethoxide. Normally, because of convenience and cost, hydroxide, particularly sodium hydroxide alone will be preferred as the basically reacting compound where aqueous solutions are employed for application prior to decomposition of the foam.

The basically reacting compound such as sodium hydroxide is used in a catalytic amount and normally below 5, and preferably no more than 3, parts by weight per 100 parts by weight of the scrap polyurethane and, in the case of flexible foam, advantageously as little as 1 part or less by weight of basic reacting compound per 100 parts by weight foam. Remarkably, amounts in a range between 0.1—30 parts by weight per 1000 parts of flexible foam are seen to provide particularly desirable reaction rates, providing uniform application at least on the surface of the foam is obtained.

The condition under which the polyurethane is hydrolyzed include elevated temperatures up to 300°C, more preferably superheated steam in a range between 150°C—275°C at up to ten or more atmospheres, e.g. 0.4 to 10 atmospheres, advantageously superheated steam at between 0.5—5.0, e.g. 0.9—5.0, atmospheres. Inert gas may be included as diluent, if desired.

In one preferred way of carrying out the hydrolysis, dry steam is admitted into an evacuated reaction chamber containing the foam having the basically reacting compound deposited thereon whereby hydrolysis begins with gaseous effluent containing diamine reaction product allowed to be discharged from the chamber while liquid polyol product is collected at the bottom of the chamber. An apparatus suitable to carry out this invention is described in U.S. Patent Application Serial No. 816,836, filed on July 18, 1977 (German Patent Application P2831483.2). Of course, in such apparatus, there need be only one inlet tube for admitting the water vapour rather than one for ammonia and one for water vapour. Moreover, the apparatus described in U.S. Patent 4,025,559 can also be used to advantage with this invention. Still other apparatus include extrusion type apparatus wherein the basically reacting compound is applied during extrusion of the polyurethane foam and where superheated steam is formed from the evaporation of water applied to the foam during extrusion which contains the basically reacting compound.

The time required to carry out the hydrolytic decomposition varies in accordance with such conditions as temperature, pressure, foam type and amount of catalyst present. Theoretical yields are achievable, however, as measured by diamine production, in less than two hours and even within one hour at high temperature within the above noted ranges. Even at lower temperatures within the above ranges the rate of hydrolysis can exceed twice that of water alone, especially in the early stages of the decomposition.

This invention is illustrated by the following specific results that are achieved by utilizing preferred procedures as hereinbefore described. The scope of this invention, however, is not to be limited to the particular details shown below as those skilled in the art will appreciate that many procedures can be designed to exploit the discovery of this invention. All parts are parts by weight in the examples.

## Example 1

(a) An analytical flexible polyurethane foam is made from the ingredients of Table I below by rapid mixing of ingredients 1—8 with ingredient 9 (Polyisocyanates) for about 15 seconds and pouring the foaming product into a mould whereby a light cream coloured flexible urethane foam (density about 2.1) is obtained after a cure of 5—10 minutes at 120°C.

3

## TABLE I
### Formulation of Flexible Polyurethane Foam

| Material — Source | Parts | Description |
|---|---|---|
| 1. Pluracol 535 (Polyol) (BASF) ("Pluracol" is a Trade Mark) | 100 | 1640 eq. wt. mostly triol |
| 2. Amine (Union Carbide) | 2 | Diethanolamine |
| 3. Water | 2.8 | Distilled |
| 4. Amine (Air Prod.) | 0.14 | Triethylenediamine |
| 5. Amine (Air Prod.) | 0.20 | Dimethylaminoethylmorpholine |
| 6. Glycol (Union Carbide) | 0.10 | 70% bis(2-Dimethylaminoethyl) ether, 30% dipropylene glycol |
| 7. Surfactant (Dow Corning) | 1.4 | Silicon glycol copolymer |
| 8. Catalyst (M & T) | 0.015 | Dibutyltindilaurate |
| 9. Diisocyanate (Mobay) | 38.4 | Toluene diisocyanate |

(b) Certain test and control samples each being 100 parts by weight are taken from foam prepared as in (a) above and treated as follows.

The samples are dipped into 0.1, 1.0 and 5.0 percent by weight aqueous solutions of sodium hydroxide, blotted dry and then dried under vacuum. A first series of control samples are then titrated with an aqueous solution of hydrochloric acid. It is determined by titration that approximately 0.1, 0.8 and 2.9 parts by weight for each 100 part by weight sample of sodium hydroxide are deposited by this dipping and drying procedure by the above solutions of 0.1, 1.0 and 5.0 percent by weight sodium hydroxide, respectively.

The test samples and other control samples (untreated by the sodium hydroxide solutions) are then individually introduced into a heated hydrolysis chamber having inlet and outlet tubes and filled with superheated steam at a pressure of approximately one atmosphere passing therethrough. Prior to introduction into the heated hydrolysis chamber each sample is placed in a heating zone wherein it is heated to 175°C by nitrogen gas so that it is introduced into the heated hydrolysis chamber at near the temperature of the superheated steam herein.

In Table II below are the results of hydrolysis of the foam at varying temperatures and at slightly above one atmospheric pressure of superheated steam with and without use of sodium hydroxide.

The results in Table II are obtained by ultraviolet analysis of the condensed gaseous effluent to measure the amount of toluene diamine as a function of time. This is accomplished by comparing the ultra violet light absorption results with a set of calibration curves obtained from passing standard toluene diamine samples through the ultra violet absorption analyzer. The values shown in Table II are weight percent foam hydrolyzed at the end of the indicated periods.

## 0 011 662

### TABLE II
#### Sodium Hydroxide Catalyzed Foam Hydrolysis Percent Hydrolysis*

| | Steam Only | 0.1 part NaOH 100 part foam | 0.8 part NaOH 100 part foam | 2.9 part NaOH 100 part foam |
|---|---|---|---|---|
| **190°C Time, Min** | | | | |
| 5 | 4.0 | 10.0 | 23.5 | 22.4 |
| 10 | 7.2 | 18.5 | 36.2 | 36.0 |
| 15 | 10.5 | 24.6 | 45.5 | 44.8 |
| 20 | 12.9 | 29.5 | 51.9 | 51.5 |
| 25 | 15.0 | 33.6 | 57.0 | 57.1 |
| 35 | 17.8 | — | 64.8 | 63.3 |
| **210°C Time, Min** | | | | |
| 2 | 5.7 | — | 14.4 | — |
| 4 | 12.7 | — | 28.8 | — |
| 6 | 17.7 | — | 38.8 | — |
| 8 | 20.4 | — | 46.1 | — |
| 10 | 23.1 | — | 52.0 | — |
| 15 | 27.6 | — | 62.4 | — |
| 20 | 30.8 | — | — | — |
| 25 | 32.7 | — | 74.9 | — |
| 35 | 36.2 | — | 81.5 | — |
| **250°C Time Min** | | | | |
| 2 | 21.9 | 47.7 | 57.0 | — |
| 4 | 33.6 | 75.8 | 80.5 | — |
| 6 | 39.8 | 86.2 | 87.3 | — |
| 8 | 44.6 | 90.8 | 89.3 | — |
| 10 | 48.6 | 92.2 | 90.2 | — |
| 15 | 57.5 | 93.6 | — | — |
| 25 | 64.9 | 94.3 | — | — |

* Based upon the theoretical yield of 19.4 parts by weight toluene diamine per 100 parts of foam.

### Example 2
The procedures of Example 1 are followed using potassium hydroxide rather than sodium hydroxide. Catalytic increase in the hydrolysis rate is also seen.

5

### Example 3

A straw coloured liquid polyol product obtained from hydrolysis in accordance with the procedure of Example 1 using a foam with 0.1 part by weight sodium hydroxide deposited per 100 parts by weight foam and hydrolyzed at 1.1 atmospheres of super heated steam at 220°C is used to replace 20% by weight of the polyols described in Table 1.

Excellent quality foam is achieved following standard foaming techniques.

## Claims

1. A method of hydrolysing polyurethane which comprises treating the polyurethane with super heated steam characterised in that the hydrolysis is effected in the presence of a basic alkali metal or alkaline earth metal compound.

2. A method in accordance with Claim 1, characterised in that the polyurethane comprises flexible polyurethane foam.

3. A method in accordance with Claim 1 or Claim 2, characterised in that the basic compound comprises an alkali metal hydroxide.

4. A method in accordance with any one of Claims 1 to 3 characterised in that the hydrolysis is effected in the presence of no more than 3 parts by weight of alkali metal or alkaline earth metal compound per 100 parts by weight of polyurethane.

5. A method in accordance with any one of Claims 2 to 4 wherein the alkali metal or alkaline earth metal compound is incorporated with the foam prior to hydrolysis by applying to the polyurethane an aqueous solution containing the said compound.

6. A method in accordance with any one of Claims 1 to 5 characterised in that the basic compound is applied to the polyurethane prior to hydrolysis to form a uniform solid layer thereon.

7. A method in accordance with any one of Claims 1 to 6 characterised in that the super heated steam is at a pressure of from 0.4 to 10 atmospheres.

8. A method in accordance with Claim 7 characterised in that the super heated steam is at a pressure of from 0.9 to 5.0 atmospheres.

9. A method according to any of Claims 1 to 8 characterised in that the hydrolysis is effected at a temperature of up to 300°C.

10. A method according to Claim 9 characterised in that the hydrolysis is effected at a temperature of from 150° to 275°C.

## Patentansprüche

1. Verfahren zur Hydrolyse von Polyurethan, bei dem dieses mit überhitztem Dampf behandelt wird, dadurch gekennzeichnet, dass die Hydrolyse in Gegenwart einer basischen Alkalimetall- oder Erdalkalimetallverbindung erfolgt.

2. Verfahren nach Anspruch 1, dadurch gekennzeichnet, dass das Polyurethan aus Polyurethanweichschaum besteht.

3. Verfahren nach Anspruch 1 oder 2, dadurch gekennzeichnet, dass als basische Verbindung ein Alkalimetallhydroxyd vorliegt.

4. Verfahren nach einem der Ansprüche 1 bis 3, dadurch gekennzeichnet, dass die Hydrolyse in Gegenwart von höchstens 3 Gewichtsteilen Alkalimetall- oder Erdalkalimetallverbindung auf 100 Gewichtsteile Polyurethan erfolgt.

5. Verfahren nach einem der Ansprüche 2 bis 4, worin die Alkalimetall- oder Erdalkalimetallverbindung vor der Hydrolyse durch Aufbringen einer diese Verbindung enthaltenden wässrigen Lösung auf das Polyurethan in den Schaum eingearbeitet wird.

6. Verfahren nach einem der Ansprüche 1 bis 5, dadurch gekennzeichnet, dass die basische Verbindung vor der Hydrolyse auf das Polyurethan unter Bildung einer gleichmässigen festen Schicht darauf aufgebracht wird.

7. Verfahren nach einem der Ansprüche 1 bis 6, dadurch gekennzeichnet, dass der überhitzte Dampf unter einem Druck von 0,4 bis 10 Atmosphären steht.

8. Verfahren nach Anspruch 7, dadurch gekennzeichnet, dass der überhitzte Dampf unter einem Druck von 0,9 bis 5,0 Atmosphären steht.

9. Verfahren nach einem der Ansprüche 1 bis 8, dadurch gekennzeichnet, dass die Hydrolyse bei einer Temperatur bis zu 300°C erfolgt.

10. Verfahren nach Anspruch 9, dadurch gekennzeichnet, dass die Hydrolyse bei einer Temperatur von 150° bis 275°C erfolgt.

## Revendications

1. Procédé pour hydrolyser du polyuréthanne qui comprend le traitement du polyuréthanne au moyen de vapeur d'eau surchauffée, caractérisé en ce qu'on effectue l'hydrolyse en présence d'un composé basique de métal alcalin ou alcalino-terreux.

2. Procédé suivant la revendication 1, caractérisé en ce que le polyuréthanne comprend de la mousse de polyuréthanne flexible.

3. Procédé suivant la revendication 1 ou 2, caractérisé en ce que le composé basique comprend un hydroxyde de métal alcalin.

4. Procédé suivant l'une quelconque des revendications 1 à 3, caractérisé en ce qu'on effectue l'hydrolyse en présence de 3 parties en poids de composé de métal alcalin ou alcalino-terreux au maximum pour 100 parties en poids de polyuréthanne.

5. Procédé suivant l'une quelconque des revendications 2 à 4, caractérisé en ce qu'on incorpore le composé de métal alcalin ou alcalino-terreux à la mousse avant l'hydrolyse en appliquant sur le polyuréthanne une solution aqueuse contenant le composé.

6. Procédé suivant l'une quelconque des revendications 1 à 5, caractérisé en ce qu'on applique le composé basique sur le polyuréthanne avant l'hydrolyse pour y former une couche solide uniforme.

7. Procédé suivant l'une quelconque des revendications 1 à 6, caractérisé en ce que la vapeur d'eau surchauffée se trouve sous une pression de 0,4 à 10 atmosphères.

8. Procédé suivant la revendication 7, caractérisé en ce que la vapeur d'eau surchauffée se trouve sous une pression de 0,9 à 5,0 atmosphères.

9. Procédé suivant l'une quelconque des revendications 1 à 8, caractérisé en ce qu'un effectue l'hydrolyse à une température s'élevant jusqu'à 300°C.

10. Procédé suivant la revendication 9, caractérisé en ce qu'on effectue l'hydrolyse à une température de 150°C à 275°C.